# EUROPEAN PATENT APPLICATION

(11) **EP 0 915 550 A1**
(43) Date of publication of application: **12.05.1999**
(21) Application number: 98630054.9
(22) Date of filing: 09.10.1998
(51) Int. Cl.: H02H 7/085

(54) **Electric motor with means for preventing thermal overload**

(30) Priority: 04.11.1997 US 963711
(71) Applicant: CARRIER CORPORATION, Syracuse New York 13221 (US)
(72) Inventor: Bussjager, Ruddy C., Chittenango, New York 13037 (US)
(74) Representative: Schmitz, Jean-Marie

(57) **Abstract**

An apparatus and method of protecting against overload conditions in electric motors. The electric motor includes at least one coil winding, a power supply for energizing the coil winding, and control means for controlling power supplied to the coil winding. The control means includes thermal switching means, preferably bimetallic switches, arranged in thermal communication with the coil winding such that the thermal switching means can quickly and accurately sense changes in coil winding temperature. The thermal switching means is also electrically isolated from the coil windings (i.e., the line current to the windings does not pass through the thermal switching means), to thereby allow for a substantial reduction in the size and mass of the thermal switching means. The method of the present invention provides for protection against thermal overload in an electric motor by positioning thermal switching means in thermal communication with at least one coil winding of the electric motor, and electrically isolating the thermal switching means from all coil windings of the electric motor.

## Description

The present invention relates to an electric motor having means for preventing thermal overload of the coil windings in the motor, and a method for preventing thermal overload conditions in electric motors.

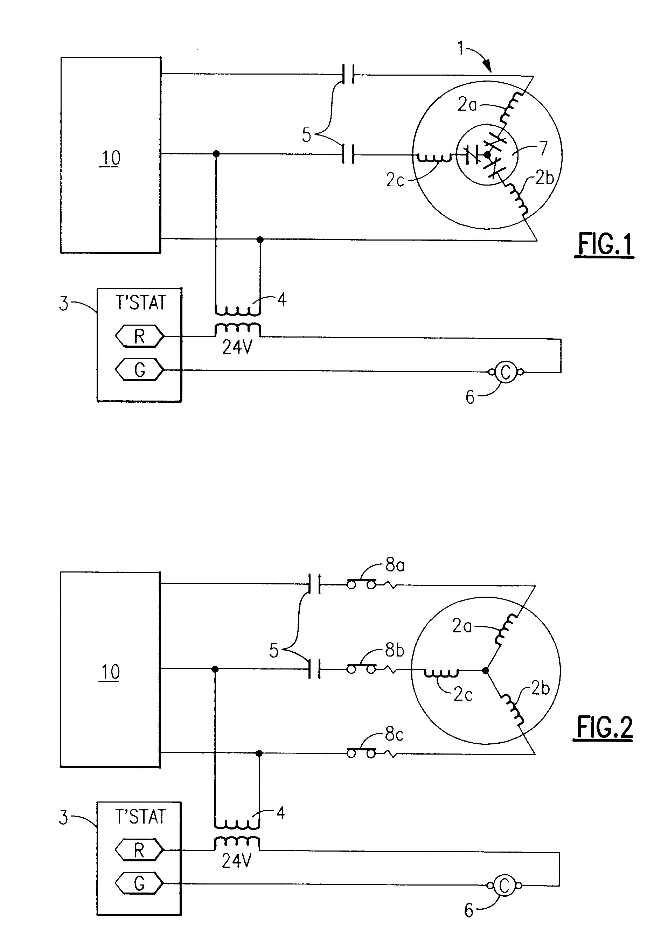

It is known in the art to use bi-metallic line breakers or calibrated circuit breakers to protect against thermal overload conditions in the windings of an electric motor. Fig. 1 shows an example of a prior art technique for providing such protection. Fig. 1 shows a motor 1 having three phase windings 2a, 2b and 2c. As shown in the context of an electric motor for a fan used in a heat pump system, a thermostat 3 controls application of power from a power source 10 to the windings of the motor via contactor switches 5 of a contactor coil 6. A control power source 4 is also shown. A bimetallic internal overload line breaker 7 is provided both in thermal contact and electrical communication with the windings of the motor 1. That is, line breaker 7 is in physical contact with the windings of the motor so as to sense the temperature thereof, and is also in electrical communication with the windings since line current provided by power source 10 passes through the line breaker. A typical example of such an internal line breaker is that provided by Texas Instruments under product designation MWJ.

The problem with this prior art technique is that the bimetallic internal overload line bleaker is of considerable mass, because it must handle the current, especially the locked rotor current, that passes through the three phase windings of the motor. As a result, the line breaker, because of its substantial mass, has a relatively slow response time with respect to changes in temperature of the coil windings.

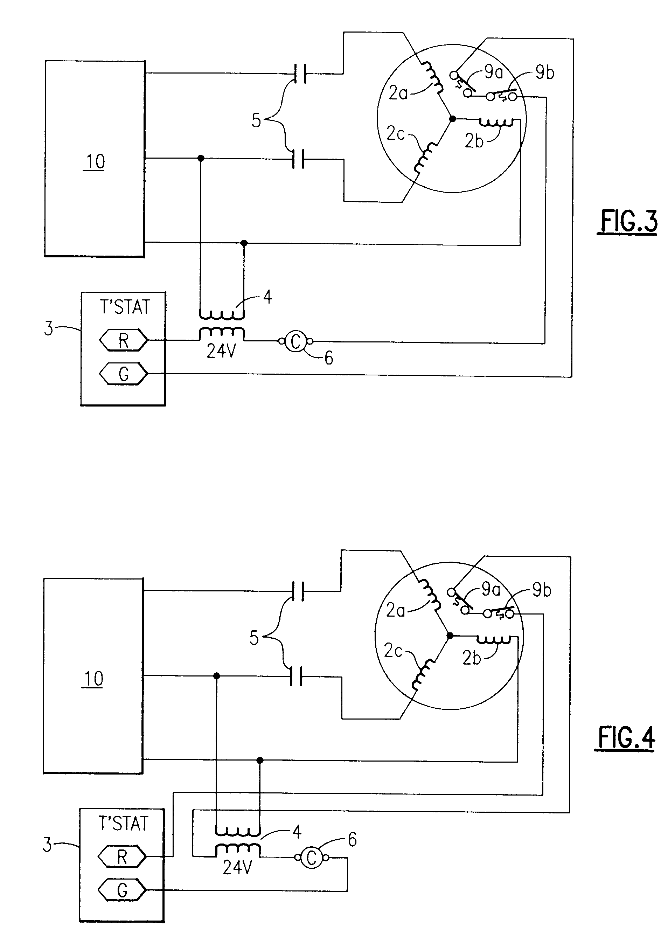

Fig. 2 shows another prior art construction of an overload protection circuit for an electric motor. In this case, a calibrated circuit breaker with contacts 8a, 8b and 8c are provided in the supply lines that power the three phase windings of the electric motor. These circuit breakers are sized to handle the locked rotor current of the electric motor, and calibrated to trip at a specific overload current. They are thus designed only to sense the current flowing to the three phase windings of the coil. As the current draw increases, the coil windings heat up. After the current exceeds a preset level, the circuit breaker will trip and cut off power to the electric motor.

The drawback with this prior art technique lies in the fact that the circuit breakers are current-sensitive only. Therefore, the circuit breakers cannot accurately sense changes in temperature of the windings in the motor. Any given electric motor can draw the same amount of current through the coil windings, even though the actual temperature of the coil windings could vary drastically depending upon the environment in which the motor is used. Accordingly, this inability to sense temperature of the coil windings is a serious drawback in that it is difficult to use a single motor to service various applications in various environments.

Another prior art technique employs thermistors embedded in the coil windings of the electric motor. An electronic module is employed to continuously sense the resistance of the thermistors to in turn sense changes in temperature of the motor windings. While this technique provides a very accurate determination of winding temperature, it is relatively expensive.

It is therefore an object of the present invention to provide an apparatus and method of protecting against overload conditions in electric motors in an easy and cost effective manner.

The electric motor according to the present invention includes at least one coil winding, a power supply for energizing the coil winding, and control means for controlling power supplied to the coil winding. The control means includes thermal switching means, preferably bimetallic switches, arranged in thermal communication with the coil winding such that the thermal switching means can quickly and accurately sense changes in coil winding temperature. The thermal switching means is also electrically isolated from the coil windings (i.e., the line current to the windings does not pass through the thermal switching means), to thereby allow for a substantial reduction in the size and mass of the thermal switching means. This reduction facilitates the extremely quick response time of the thermal switching means.

The phrase "thermal communication" as used herein means in contact with, but shielded by a non-heat-insulating layer, such as a layer of electrical insulation. A bimetallic switch is in "thermal communication" with the windings of an electric motor if the heat created by the windings can pass easily and quickly to the switch through the interposed electrically insulating layer. The phrases "electrically isolated" or "electrical isolation" as used herein mean that the bimetallic switch is not in direct series contact with the windings of the coil (i.e., the line current supplied to the windings does not pass though the bimetallic switches).

The present invention makes use of extremely sensitive, but also extremely cost effective, bimetallic switches that are positioned in thermal communication with at least one coil winding of an electric motor, but in electrical isolation with all of the coil windings in the motor, in order to sense the temperature of the coil windings in a quick and accurate manner. In practice, the present invention provides the same thermal overload protection as the thermistor-based prior art technique discussed above, but at a huge cost savings.

As with conventional motors, the electric motor of the present invention is associated with a contactor coil and a power supply. The thermal switching means can be located, electrically, either between the contactor coil and the power supply, or upstream of the power supply.

The method of the present invention provides for protection against thermal overload in an electric motor by positioning thermal switching means in thermal communication with at least one coil winding of the electric motor, and electrically isolating the thermal switching means from all coil windings of the electric motor.

This object is achieved in a method and apparatus according to the preambles of the claims and by the features of the characterizing parts thereof.
Fig. 1 shows a circuit diagram employing a first prior art technique for protecting against thermal overload in an electric motor;
Fig. 2 is a circuit diagram showing a second prior art technique for protecting against thermal overload in an electric motor;
Fig. 3 is a circuit diagram showing the thermal overload protection in accordance with the present invention; and
Fig. 4 is a second embodiment of the thermal overload protection in accordance with the present invention.

The circuit diagram in Fig. 3 employs the same reference numerals as Figs. 1 and 2 to identify similar components. While the present invention will be explained with reference to a fan motor for a heat pump, it is to be understood that the teachings of the present invention apply to any electric motor, single phase or three phase.

In accordance with this embodiment of the present invention, bimetallic switches 9a and 9b are embedded in at least two coil windings of a three phase electric motor and are, therefore, in thermal contact therewith. The bimetallic switches are not in electrical communication with any of the coil windings, in that line current from the power supply 10 is not first passed through the bimetallic switches before entering the windings of the electric motor. In this way, the mass of the bimetallic switches can be reduced substantially, because those switches are not required to handle the current loads passed through the windings of the motor. The responsiveness of the bimetallic switches to changes in temperatures of the coil windings is significantly increased as a result of their reduced mass. An example of a bimetallic switch that is useful in the present invention is the 8mm bimetallic switch manufactured by Texas Instruments.

The bimetallic switches, being in thermal communication with the coil windings of the electric motor, and being of relatively small mass, are able to sense temperature changes in the coil windings very quickly and accurately. If the coil windings become too hot, then the bimetallic switches break the circuit and stop the supply of power to contactor coil 6 and thus disengage the motor.

Fig. 4 shows another embodiment of the present invention which is similar to that shown in Fig. 3, except that the bimetallic switches 9a and 9b are connected to the hot side of control power supply 4. In this way, if the coil windings over-heat, the bimetallic switches cut off power to the entire system, including the power not only to the motor, but also to the associated compressor (not shown) of the heat pump system.

The present invention provides a significant improvement in the area of thermal overload protection for electric motors, in that it provides the sensing accuracy attributable to the thermistor-based prior art technique discussed above, but at a 35 to 50-fold cost reduction. Moreover, the present invention is also more accurate and less expensive than the first and second prior art techniques discussed above.

## Claims

1. An electric motor having thermal overload protection, characterized by:
at least one coil winding;
a power supply for energizing said coil winding; and
control means for controlling power supplied to said coil winding, said control means including thermal switching means arranged in thermal communication with said coil winding, but in electrical isolation with respect to said coil winding.

2. The electric motor of claim 1, wherein said thermal switching means is a bimetallic switch.

3. The electric motor of claim 2, wherein said bimetallic switch is embedded in said coil winding.

4. The electric motor of claim 1, wherein said electric motor is a three-phase motor including three coil windings, and said control means comprises a first bimetallic switch in thermal communication with a first one of said three coil windings and a second bimetallic switch in thermal communication with a second one of said three coil windings.

5. The electric motor of claim 4, wherein said control means is further characterized by a third bimetallic switch in thermal communication with a third one of said three coil windings.

6. The electric motor of claim 1, wherein said control means is further characterized by a contactor coil and said thermal switching means is positioned electrically between said contactor coil and said power supply.

7. A method of protecting against thermal overload in an electric motor, characterized by the step of:
positioning thermal switching means in thermal communication with at least one coil winding of the electric motor: and
electrically isolating the thermal switching means from all coil windings of the electric motor.

8. The method of claim 7, wherein the thermal switching means is a bimetallic switch.

9. The method of claim 8, wherein the bimetallic switch is embedded in said at least one coil winding.

10. The method of claim 7, wherein the electric motor is a three-phase motor including three coil windings, and the thermal switching means includes a first bimetallic switch in thermal communication with a first one of the three coil windings and a second bimetallic switch in thermal communication with a second one of the three coil windings.

11. The method of claim 10, wherein the thermal switching means further includes a third bimetallic switch in thermal communication with a third one of the three coil windings.

12. The method of claim 7, wherein the electric motor is associated with a power supply and a contactor coil, and the thermal switching means is positioned electrically between the contactor coil and the power supply.

13. The method of claim 7, wherein the electric motor is associated with a power supply and the thermal switching means is positioned electrically upstream of the power supply.
